(19) **Europäisches Patentamt / European Patent Office / Office européen des brevets**

(11) **EP 4 782 481 A1**

(12) **EUROPEAN PATENT APPLICATION**
published in accordance with Art. 153(4) EPC

(43) Date of publication:
**29.07.2026 Bulletin 2026/31**

(21) Application number: **24868297.3**

(22) Date of filing: **19.09.2024**

(51) International Patent Classification (IPC):
*C08J 3/12* $^{(2006.01)}$     *C08B 11/12* $^{(2006.01)}$
*H01M 4/62* $^{(2006.01)}$

(52) Cooperative Patent Classification (CPC):
**C08B 11/12; C08J 3/12; H01M 4/62;** Y02E 60/10

(86) International application number:
**PCT/JP2024/033382**

(87) International publication number:
**WO 2025/063220 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.09.2023 JP 2023152638**

(71) Applicant: **Daicel Miraizu Ltd.**
**Tokyo 108-8231 (JP)**

(72) Inventor: **DOI, Kuniaki**
**Tokyo 108-8231 (JP)**

(74) Representative: **Grünecker Patent- und Rechtsanwälte**
**PartG mbB**
**Leopoldstraße 4**
**80802 München (DE)**

(54) **CARBOXYMETHYL CELLULOSE OR SALT THEREOF, AND METHOD FOR PRODUCING SAME**

(57)     Provided is carboxymethyl cellulose or a salt thereof capable of suppressing the formation of lumps when mixed with water. The carboxymethyl cellulose or a salt thereof is granular carboxymethyl cellulose or a salt thereof and has a bulk density of from 100 to 400 g/L.

EP 4 782 481 A1

## Description

Technical Field

The present disclosure relates to carboxymethyl cellulose or a salt thereof, and a method for producing the same.

Background Art

Carboxymethyl cellulose (hereinafter also referred to as "CMC") is one of typical water-soluble polymer materials, and is used in a wide range of applications such as foods, cosmetics, and pharmaceuticals as well as electrode materials for lithium-ion batteries. Usually, CMC is often used in the form of an aqueous solution, but when it is mixed with water, lumps (agglomerate or sticky agglomeration) are likely to occur. Once lumps are formed, the penetration of water into the lumps is inhibited, and therefore, it takes a lot of time to dissolve CMC, and the productivity of the product cannot be improved.

Patent Document 1 discloses a method for granulating a solvent and water-containing slurry of a carboxymethyl cellulose ether alkali salt by spray drying the slurry under an atmosphere of at least one of an inert gas or air, in which the slurry is atomized by flowing the slurry down onto a rotating disk or by spraying the slurry from a nozzle. It is described that 80% or more of the whole of the obtained CMC powder has a particle size within a range of from 70 to 200 $\mu$m, the proportion of fine powder having a particle size of 20 $\mu$m or less is as small as 2.0% or less of the whole, and the CMC powder is excellent in solubility.

Patent Document 2 describes that CMC or a salt thereof having a predetermined particle size distribution can be efficiently dissolved in water.

　　Patent Document 1: JP 8-73501 A
　　Patent Document 2: JP 2021-21018 A

Summary of Invention

An object of the present disclosure is to provide carboxymethyl cellulose or a salt thereof capable of suppressing the formation of lumps when mixed with water.

The present disclosure includes the following aspects.

　　[1] Carboxymethyl cellulose or a salt thereof, being granular carboxymethyl cellulose or a salt thereof and having a bulk density of from 100 to 400 g/L.
　　[2] A material for a lithium-ion battery, the material containing the carboxymethyl cellulose or a salt thereof described in [1].
　　[3] A method for producing the carboxymethyl cellulose or a salt thereof described in [1], the method including granulating CMC or a salt thereof as a raw material.

According to the present disclosure, it is possible to provide carboxymethyl cellulose or a salt thereof capable of suppressing the formation of lumps when mixed with water.

Description of Embodiments

Hereinafter, an embodiment of the present disclosure will be described in detail. However, the scope of the present disclosure is not limited to the embodiment described herein, and various modifications can be made without departing from the gist of the present disclosure. Each aspect disclosed in the present specification can be combined with any other feature disclosed in the present specification. In a case where a plurality of upper limit values and lower limit values are described for a specific parameter, any upper limit value and any lower limit value among these upper limit values and lower limit values can be combined to obtain a suitable numerical range. A lower limit value and/or an upper limit value of a numerical range described in the present disclosure may be replaced with a numerical value that is included within the numerical range and that is presented in Examples. The expression "from X to Y" with regard to a numerical range means "X or more and Y or less". Where a particular description given for an embodiment also applies to another embodiment, that description may be omitted in the other embodiment.

Each of the configurations, combinations thereof, and the like in each of the embodiments is an example, and additions, omissions, substitutions, and other changes of the configurations may be made as appropriate without departing from the spirit of the present disclosure.

Granular CMC or Salt thereof

The carboxymethyl cellulose (CMC) or a salt thereof according to the present embodiment (hereinafter also referred to as "granular CMC or a salt thereof") is granular and has a bulk density of from 100 to 400 g/L. The term "granular" is used as a term to describe a form. The "granular CMC or a salt thereof" may be a "granular material" of CMC or a salt thereof, or may be a "granulated material" of CMC or a salt thereof. The "granular CMC or a salt thereof" may be a particle in which fine particles are adhered to each other and agglomerated in granular form, and in this case, the "granular CMC or a salt thereof" may be expressed as "a granular agglomerate of fine particles of CMC or a salt thereof".

CMC or Salt thereof

The CMC has a structure in which at least one of hydroxy groups in a glucose unit constituting cellulose is substituted with a carboxymethyl ether group. The CMC may be in the form of a salt. Examples of the salt of the CMC include an alkali metal salt such as a sodium salt, a potassium salt, and a lithium salt; an alkaline earth metal salt such as a calcium salt; and an ammonium salt. These salts may be contained alone or in combination of two or more thereof. Among these salts, a sodium salt, an ammonium salt, or a lithium salt is usually adopted. The CMC or a salt thereof may be contained in combination with each other. The method for producing CMC or a salt thereof is not limited, and CMC or a salt thereof can be synthesized by a known method.

The average degree of substitution (hereinafter also referred to as "degree of etherification" or "DS", and sometimes referred to simply as "degree of substitution") of the CMC or a salt thereof is preferably in a range of from 0.1 to 3.0, and in the application to an aqueous composition for an electrode of a lithium-ion battery, the average degree of substitution is preferably from 0.3 to 2.5, more preferably from 0.4 to 2.0, still more preferably from 0.5 to 1.6, yet still more preferably from 0.6 to 1.4, particularly preferably from 0.7 to 1.3, and most preferably from 0.8 to 1.2. A higher average degree of substitution is likely to provide better solubility or instant solubility, but when the average degree of substitution is too high, hydrophobic interaction with an active material is less likely to occur, which may decrease coating film strength. Therefore, the average degree of substitution is preferably within the above numerical range. In one embodiment, the average degree of substitution may be 0.93, or may be a range defined by using this value as the upper limit value or the lower limit value of the above numerical range.

The average degree of substitution (degree of etherification) can be measured by the method described below.

(1) 1.000 g of a sample is accurately weighed, placed in a porcelain crucible, carbonized, then completely ashed at 630°C, and allowed to cool at room temperature. (2) About 250 mL of ion-exchanged water and 40 mL of 0.05 mol/L sulfuric acid are precisely weighed and added to a beaker. (3) The above (1) is placed into the above (2), and the mixture is boiled for 30 minutes with a lid loosely placed thereon, and then cooled in cold water. After cooling, 5 drops of phenolphthalein solution are added, and the solution is subjected to neutralization titration with 0.1 mol/L aqueous sodium hydroxide solution. A blank test is also performed in the same manner, and the degree of etherification is calculated from the following equation.

$$\text{Degree of etherification} = 162 \times A_1/(10000 - 80 \times A_1)$$

where $A_1$ is the amount (mL) of 0.05 mol/L sulfuric acid consumed by bound alkali in 1 g of the sample on a dry matter basis, and is represented by the following equation:

$$A_1 = (B_1 - S_1) \times F_1/(W_1 \times (1 - M_1/100)) - \text{Alkalinity}$$

where $B_1$ is the amount (mL) of the 0.1 mol/L aqueous sodium hydroxide solution consumed in the blank test, $S_1$ is the amount (mL) of the 0.1 mol/L aqueous sodium hydroxide solution consumed in the actual test, $W_1$ is the amount (g) of the sample, $M_1$ is the loss on drying (mass%) of the sample, and $F_1$ is the factor of the 0.1 mol/L aqueous sodium hydroxide solution.

The loss on drying is measured in accordance with JIS P 8203:2010 (ISO 638:2008), "Paper, board and pulps - Determination of dry matter content - Oven-drying method".

The alkalinity can be measured by the following method. That is, about 250 mL of ion-exchanged water is placed into a beaker, and 1.000 g of a sample is accurately weighed and added in small portions while stirring to dissolve the sample, and then 5 mL of 0.05 mol/L sulfuric acid is added. After boiling for 10 minutes with a lid loosely placed thereon, the mixture is cooled in cold water. After cooling, 5 drops of phenolphthalein solution are added, and the solution is subjected to neutralization titration with 0.1 mol/L aqueous sodium hydroxide solution. A blank test is also performed in the same manner, and the alkalinity is calculated from the following equation:

$$\text{Alkalinity} = (B_2 - S_2) \times F_2/(W_2 \times (1 - M_2/100))$$

where $B_2$ is the amount (mL) of the 0.1 mol/L aqueous sodium hydroxide solution consumed in the blank test, $S_2$ is the amount (mL) of the 0.1 mol/L aqueous sodium hydroxide solution consumed in the actual test, $W_2$ is the amount (g) of the sample, $M_2$ is the loss on drying (mass%) of the sample, and $F_2$ is the factor of the 0.1 mol/L aqueous sodium hydroxide solution.

The loss on drying can be measured in the same manner as described in the section of the average degree of substitution.

Bulk Density

The granular CMC or a salt thereof according to the present embodiment has a bulk density of from 100 to 400 g/L. With the bulk density being from 100 to 400 g/L, lumps are less likely to be formed when the granular CMC or a salt thereof is mixed with water. Since lumps are less likely to be formed, even when the molecular weight of the CMC or a salt thereof is large, the CMC or a salt thereof can be efficiently dissolved in water in a short time. That is, the granular CMC or a salt thereof has excellent instant solubility in water. This granular CMC or a salt thereof can be dissolved in water even under milder conditions than those of the known art. That is, the granular CMC or a salt thereof has excellent solubility in water.

When this granular CMC or a salt thereof is used for producing an aqueous composition for an electrode of a lithium-ion battery, the time required for preparing the aqueous composition (or a slurry composition) can be shortened, and the formation of insoluble matter that causes product defects can also be suppressed. As a result, the productivity (or yield) of the lithium-ion battery can be effectively improved. Since the formation of insoluble matter can be suppressed, additional effects can be obtained, such as suppressing the formation of pinholes on the electrode surface and yielding an electrode layer having a low electrical resistance. The term "insoluble matter" as used herein refers to a substance that does not dissolve even when mixed for a long time, and is distinguished from a lump that is undissolved matter.

The bulk density of the granular CMC or a salt thereof is from 100 to 400 g/L, preferably from 150 to 380 g/L, more preferably from 200 to 370 g/L, still more preferably from 250 to 360 g/L, and particularly preferably from 280 to 350 g/L. In one embodiment, the bulk density of the granular CMC or a salt thereof may be 305 g/L, or 333 g/L, or may be a range defined by using these values as the upper limit value or the lower limit value of the above numerical range.

The "bulk density" is a tap bulk density, and can be calculated from the following equation by filling accurately weighed granular CMC or salt thereof in a graduated cylinder, tapping the cylinder several times from a height of about 5 cm, and then reading the volume. The details of the measurement method are as described in the Examples below. Equation:

$$\text{Bulk density (g/L)} = \frac{\text{Net weight of the sample (g)}}{\text{Volume of the sample after dropping (ml)}} \times 1000$$

As a method for adjusting the bulk density, the bulk density can be adjusted by, for example, selecting a granulation method, adjusting granulation conditions, and the like. For example, when a fluidized bed granulation method or a tumbling granulation method is employed as the granulation method, the bulk density tends to be further reduced. In the fluidized bed granulation method or the tumbling granulation method, the bulk density can be more easily adjusted to from 100 to 400 g/L by adjusting, for example, the supply air temperature, the supply air amount, the atomization air amount, the water addition percentage, and the like during granulation.

Total Pore Volume

In one embodiment, the granular CMC or a salt thereof has a total pore volume, as measured by mercury porosimetry, of preferably from 1.3 to 3.5 mL/g, more preferably from 1.5 to 3.0 mL/g, still more preferably from 1.8 to 2.8 mL/g, more preferably from 1.9 to 2.7 mL/g, and particularly preferably from 2.0 to 2.6 mL/g. In one embodiment, the total pore volume of the granular CMC or a salt thereof, as measured by mercury porosimetry, may be 2.4 mL/g, or 2.5 mL/g, or may be a range defined by using these values as the upper limit value or the lower limit value of the above numerical range.

With the total pore volume being from 1.3 to 3.5 mL/g, the formation of lumps is likely to be further suppressed. The "total pore volume" is measured by mercury porosimetry. Details of the mercury porosimetry are in accordance with JIS R 1655:2003. The total pore volume can be measured using a mercury porosimeter. The principle of the mercury porosimetry is described in the section of porosity described below.

As a method for adjusting the total pore volume, the total pore volume can be adjusted by, for example, selecting a granulation method, adjusting granulation conditions, and the like. As an example, when a fluidized bed granulation method or a tumbling granulation method is employed as the granulation method, the total pore volume tends to be higher. In the fluidized bed granulation method or the tumbling granulation method, the total pore volume can be more easily adjusted to the predetermined range described above by adjusting, for example, the supply air temperature, the supply air amount, the atomization air amount, the water addition percentage, and the like during granulation.

Porosity

In one embodiment, the granular CMC or a salt thereof has a porosity, as measured by mercury porosimetry, of preferably from 65.0 to 90.0 volume%, more preferably from 68.0 to 88.0 volume%, still more preferably from 70.0 to 85.0 volume%, yet still more preferably from 73.0 to 85.0 volume%, and particularly preferably from 75.0 to 83.0 volume%. In one embodiment, the porosity of the granular CMC or a salt thereof may be 79.3 volume%, or may be a range defined by using this value as the upper limit value or the lower limit value of the above numerical range.

With the porosity being from 65.0 to 90.0 volume%, the formation of lumps is likely to be further suppressed. The "porosity" is measured by mercury porosimetry. Details of the mercury porosimetry are in accordance with JIS R 1655:2003. The porosity can be measured using a mercury porosimeter. The mercury porosimetry is a method for obtaining information on the physical form of a solid by measuring the sizes and volumes of pores in the solid. The principle of the mercury porosimetry is that pressure is applied to mercury to intrude the mercury into pores of an object to be measured, and the relationship between the applied pressure and the volume of the mercury intruded (penetrated) is measured. In this case, the mercury penetrates into the particle of CMC or a salt thereof sequentially, starting from the large voids present therein.

As a method for adjusting the porosity, the porosity can be adjusted by, for example, selecting a granulation method, adjusting granulation conditions, and the like. As an example, when a fluidized bed granulation method or a tumbling granulation method is employed as the granulation method, the porosity tends to be higher. In the fluidized bed granulation method or the tumbling granulation method, the porosity can be more easily adjusted to the predetermined range described above by adjusting, for example, the supply air temperature, the supply air amount, the atomization air amount, the water addition percentage, and the like during granulation.

Average Particle Size D50

The average particle size of the granular CMC or a salt thereof is, as the volume-based cumulative 50% size D50, preferably from 50 to 300 $\mu$m, more preferably from 80 to 280 $\mu$m, still more preferably from 100 to 250 $\mu$m, yet still more preferably from 110 to 230 $\mu$m, and particularly preferably from 150 to 200 $\mu$m. The average particle size (volume-based cumulative 50% size D50) can be measured by a commonly used method depending on the particle size, and may be measured using a laser diffraction-type particle size distribution analyzer or may be calculated by analyzing an image based on an electronic microscope. Furthermore, the average particle size can also be measured using an image-based particle size distribution measurement device (e.g., "morphologiG3" available from Malvern Panalytical Ltd.).

In one embodiment, the average particle size of the granular CMC or a salt thereof may be 171 $\mu$m or 176 $\mu$m as the volume-based cumulative 50% size D50, or may be a range defined by using these values as the upper limit value or the lower limit value of the above numerical range.

Dispersibility

The granular CMC or a salt thereof has a dispersibility, as measured using a powder tester, of preferably less than 20.0, more preferably 10.0 or more and less than 20.0, still more preferably 10.0 or more and 19.0 or less, yet still more preferably 12.0 or more and 18.0 or less, and particularly preferably 13.0 or more and 17.0 or less. With the dispersibility being within the above range, the formation of lumps is likely to be further suppressed. In addition, in a case where the granular CMC or a salt thereof is used as an aqueous composition, the formation of insoluble matter is likely to be further suppressed.

As a method for measuring the dispersibility, the dispersibility can be measured by using a powder characteristics tester (Powder Tester PT-X (available from Hosokawa Micron Corporation)), and calculating the dispersibility from the amount of powder that has dropped onto a watch glass when 10 g of a sample is charged into a dispersing unit of PT-X and dropped, according to the following equation:

Dispersibility (%) = (10 (g) - Amount (g) of powder that has dropped onto the watch glass)/10 (g)

Viscosity of Aqueous Solution

The viscosity of a 1 mass% aqueous solution of the granular CMC or a salt thereof at a temperature of 25°C may be selected from the range of, for example, from about 100 to about 20000 mPa·s, is preferably from about 300 to about 150000 mPa·s, more preferably from about 400 to about 10000 mPa·s, and still more preferably from about 500 to about 8000 mPa·s, and may be most preferably from about 1500 to about 3000 mPa·s.

In applications as a lithium-ion battery material (e.g., applications as an electrode material for a lithium-ion battery), CMC or a salt thereof itself can be a resistor. Thus, when CMC or a salt thereof is added in a large amount, the battery performance is lowered. Therefore, a high viscosity product is required in some cases to allow a desired function (a thickening effect and the like) to be exhibited even with a small amount of addition.

On the other hand, from the viewpoint of improving productivity, there is a demand for CMC or a salt thereof that has a small amount of undissolved matter (lumps and the like) resulting in product defects and that can be dissolved rapidly in a short time. However, as the viscosity of the aqueous solution is higher, lumps are more likely to occur and the dissolution time is longer. Therefore, these properties are in a trade-off relationship, and it has been difficult to satisfy all of them. The granular CMC or a salt thereof of the present disclosure can be suitably used because the dissolution time can be effectively shortened even when the viscosity of the aqueous solution is high.

In the present disclosure, the viscosity of a 1 mass% aqueous solution of the granular CMC or a salt thereof at a temperature of 25°C can be measured by the method described below.

100 mL of ion-exchanged water is placed in a dissolution bottle for viscosity measurement (hereinafter referred to as "viscosity bottle"). Then, $(2.50 \times X_3)$ g of a sample, which has been weighed accurately and separately, is added thereto in small portions without forming lumps, and is lightly crushed with a glass rod. After the sample has sufficiently swollen, the amount $V_3$ (mL) of ion-exchanged water added for correction as determined by the following equation is added, and the sample is completely dissolved while stirring with a glass rod from time to time. After the sample has been dissolved, the mixture is degassed under reduced pressure, the viscosity bottle is placed in a constant-temperature water bath until the liquid temperature reaches 25°C, and the sample solution is uniformly stirred. Then, the viscosity is measured at 60 rpm using a B-type viscosimeter.

$$\text{Viscosity (mPa·s)} = \text{Reading of scale} \times \text{Conversion factor}$$

$$V_3 = 2.5 \times (100 - X_3 - M_3) - 100$$

where $V_3$ is the amount (mL) of ion-exchanged water added for correction, $X_3$ is the measured concentration (mass%), and $M_3$ is the loss on drying (mass%) of the sample.

The loss on drying can be measured in the same manner as described in the section of the average degree of substitution.

Suppression of Formation of Lumps

The granular CMC or a salt thereof of the present disclosure can suppress the formation of lumps when mixed with water. The determination of whether or not the formation of lumps can be suppressed can be confirmed as follows. That is, CMC is added all at once to pure water, so that the concentration of granular CMC or a salt thereof is 1.5%, followed by stirring and mixing at a temperature of 25°C and a stirring speed of 4000 rpm for a stirring time of 3 minutes. The obtained aqueous solution is filtered through a wire mesh having an opening of 106 μm. The presence or absence of the formation of lumps can be determined based on whether transparent agglomerates are present or absent on the wire mesh.

In the granular CMC or a salt thereof of the present disclosure, the formation of lumps is not visually confirmed even in a mixing time of about one tenth of the known mixing time (the known and typical stirring time is 30 minutes).

Solubility in Water

The dissolution time for preparing a 1 mass% aqueous solution of the granular CMC or a salt thereof may be, for example, about 10 minutes or less (e.g., from about 10 seconds to about 8 minutes), preferably about 6 minutes or less (e.g., from about 30 seconds to about 5 minutes), more preferably about 5 minutes or less (e.g., from about 1 to about 4 minutes), and particularly about 4 minutes or less (e.g., from about 1.5 to about 3.5 minutes), at a temperature of 25°C and a stirring speed of 4000 rpm. The dissolution time can be measured by the method described in the Examples below.

Applications

The granular CMC or a salt thereof of the present disclosure is less likely to form lumps when mixed with water, and thus can be preferably used for production of an aqueous composition. For example, the granular CMC or a salt thereof can be preferably used as a lithium-ion battery material (e.g., an electrode material for a lithium-ion battery (e.g., a thickener, a dispersion stabilizer, and the like)).

Method for Producing Granular CMC or Salt thereof

The granular CMC or a salt thereof can be obtained by granulating CMC or a salt thereof as a raw material. That is, a method for producing the granular CMC or a salt thereof includes granulating CMC or a salt thereof as a raw material.

Raw Material

As the raw material, a reaction liquid of CMC or a salt thereof may be used as it is or after being appropriately diluted, particles of CMC or a salt thereof after synthesis may be used as it is, or a pulverized product of particles of CMC or a salt thereof may be used. When the reaction liquid of CMC or a salt thereof is used as it is, it is preferable to granulate it while drying in the granulation. From the viewpoint of further improving the solubility in water by further reducing the size of the insoluble matter when the obtained granular CMC or a salt thereof is mixed with water, a pulverized product of particles of CMC or a salt thereof can be used as the raw material. When a pulverized product of particles of CMC or a salt thereof is used, the method for producing the granular CMC or a salt thereof may include pulverizing the particles of CMC or a salt thereof prior to the granulation. The pulverization can be performed by a known method using, for example, a jet mill, a roller mill, a high-speed rotary pulverizer, a container-driven mill, or the like.

Granulation

The granulation may be performed by a known granulation method. As the granulation method, a wet granulation method is preferable from the viewpoint that the bulk density, the porosity, the total pore volume, or the like can be easily adjusted. Examples of the wet granulation method include a fluidized bed granulation method, a high-speed mixing-stirring granulation method, an extrusion granulation method, a mixing-stirring granulation method, and a tumbling granulation method. From the viewpoint of more easily controlling the bulk density, the porosity, the total pore volume, or the like of the granular CMC or a salt thereof to be obtained, a fluidized bed granulation method or a tumbling granulation method is preferable.

The fluidized bed granulation method is a method in which a fluidized bed of initially formed fine particles of CMC or a salt thereof (raw material) is formed by an air flow, and water (or an aqueous solution of the CMC or a salt thereof) is sprayed into the bed while drying, thereby causing the fine particles to adhere to and agglomerate with each other to granulate the fine particles.

The type of the fluidized bed granulator is not particularly limited, and examples thereof include a normal type (FD) in which drying can be performed simultaneously with granulation, and a pulsed fluidized bed type (PLS) in which air in the lower part is a pulsed type. The mounting position of the spray nozzle may be any of a top spray system, a bottom spray system, and a tangential spray system, but the top spray system is preferable from the viewpoint of more easily suppressing the formation of lumps. In the top spray system, the spray nozzle may be mounted at any of the upper stage, the middle stage, and the lower stage. As the fluidized bed granulator, it is possible to use a fluidized bed granulating dryer or a pulsed fluidized bed granulating dryer available from Powrex Corporation (PLS series), as well as a fluidized bed granulating dryer available from the companies such as EARTHTECHNICA Co., Ltd., Nittokiki Finetec Co., Ltd., or OKAWARA MFG. Co. Ltd.

In the fluidized bed granulation method, the granulation conditions are appropriately selected from the viewpoint of easily adjusting the bulk density, the total pore volume, and/or the porosity of the granular CMC or a salt thereof to be obtained. For example, the supply air temperature may be from 40 to 80°C, from 45 to 75°C, from 50 to 65°C, from 55 to 65°C, or from 58 to 63°C.

The supply air amount may be from 0.1 to 2.0 m$^3$/min, from 0.1 to 1.5 m$^3$/min, from 0.2 to 1.0 m$^3$/min (e.g., from 0.2 to 0.4 m$^3$/min), from 0.3 to 0.8 m$^3$/min, or from 0.3 to 0.5 m$^3$/min.

The atomization air amount may be from 10 to 60 L/min, from 10 to 50 L/min (e.g., from 30 to 50 L/min, from 35 to 45 L/min), from 15 to 45 L/min, or from 20 to 40 L/min. In addition, the atomization air amount may be 20 L/min, or 40 L/min, or may be a range defined by using these values as the upper limit value or the lower limit value of the above numerical range.

In a preferred embodiment, for example, in the fluidized bed granulation method or the tumbling granulation method, the supply air temperature can be set to from 40 to 80°C (e.g., from 55 to 65°C), the supply air amount can be set to from 0.1 to 2.0 m$^3$/min (e.g., from 0.2 to 0.4 m$^3$/min), and the atomization air amount can be set to from 30 to 50 L/min (e.g., from 35 to 45 L/min), from the viewpoint of more easily adjusting the bulk density, the total pore volume, and/or the porosity of the granular CMC or a salt thereof to be obtained.

In the fluidized bed granulation method, when an aqueous solution of CMC or a salt thereof is used, the concentration thereof can be appropriately adjusted within a range in which spraying is possible.

The supply rate (spray liquid rate) of water (or an aqueous solution of CMC or salt thereof) may be from 0.1 to 25 g/min, from 0.5 to 20 g/min, from 1 to 15 g/min, from 1 to 10 g/min, or from 3 to 7 g/min.

In the fluidized bed granulation method, the amount of water (or an aqueous solution of CMC or a salt thereof) sprayed is, as the water addition percentage, preferably from 1 to 30 mass%, more preferably from 3 to 28 mass%, and still more preferably from 3 to 25 mass%, with respect to the total amount (100 mass%) of the raw material, from the viewpoint of easily adjusting the bulk density, the total pore volume, and the porosity of the granular CMC or a salt thereof to be obtained. In one embodiment, the amount of water (or an aqueous solution of CMC or a salt thereof) sprayed (water addition percentage) may be from 10 to 21 mass%, or from 15 to 21 mass%, with respect to the total amount of the raw material.

The tumbling granulation method is a method in which water (or an aqueous solution of CMC or a salt thereof) is sprayed to a raw material that is allowed to tumble, and the fine particles of CMC or a salt thereof are coated to form spherical agglomerates. The details of the raw material are as described above. The type of the tumbling granulator is not particularly limited, and it is possible to use a centrifugal fluidizing type granulation and coating equipment (Freund Corporation), a Roto-Processor (Elomatic Oy-Fuji Sangyo Co., Ltd.), a Marumerizer (Fuji Paudal Co., Ltd.), a VG Coater (Kikusui Seisakusho Ltd.), or the like.

In the tumbling granulation method, the concentration, the supply rate, and the spray amount (water addition percentage) of the aqueous solution of CMC or a salt thereof can be the same as those in the fluidized bed granulation method.

Drying

The method for producing the granular CMC or a salt thereof may include drying after the granulation, as necessary. The drying facilitates the adjustment of the residual water content in the granular CMC or a salt thereof.

The drying method may be natural drying, or drying by heating and/or reducing pressure. The drying is usually performed by heating, and the heating temperature may be, for example, from about 50 to about 200°C (e.g., from about 60 to about 150°C), and preferably from about 70 to about 100°C (e.g., from about 80 to about 90°C).

The residual water content may be, for example, about 30 mass% or less (e.g., about 20 mass% or less), and may be preferably adjusted to about 15 mass% or less (e.g., about 10 mass% or less), and more preferably about 5 mass% or less (e.g., about 1 mass% or less), with respect to the total amount of the granular CMC or a salt thereof after drying.

In the fluidized bed granulation method, the drying may also be performed in the same bed following the granulation described above.

Pulverization

The method for producing the granular CMC or a salt thereof may include further pulverizing the obtained granular CMC or a salt thereof. The pulverization method is not limited, and the pulverization can be performed by a known method using a jet mill, a roller mill, a high-speed rotary pulverizer, a container-driven mill, or the like.

Classification

The method for producing the granular CMC or a salt thereof may include classifying (or sieving) the obtained granular CMC or a salt thereof, as necessary. By including classifying, it is easy to adjust the obtained granular CMC or a salt thereof to a desired circularity. In addition, the particle size distribution is easily adjusted. Examples of the classification method include commonly used methods such as classification utilizing the principle of fluid dynamics [dry classification (gravity classification, inertial classification, centrifugal classification, and the like), wet classification (sedimentation classification, mechanical classification, hydraulic classification, centrifugal classification), and the like], and sieving. These classification methods may be used alone, or two or more thereof may be used in combination. Among these, classification is usually performed by sieving.

Composition

In one embodiment, the granular CMC or a salt thereof may be in the form of a composition. That is, the composition contains the granular CMC or a salt thereof described above. The composition may be an aqueous composition (liquid, slurry, or paste composition) containing water and the granular CMC or a salt thereof described above.

In the aqueous composition, the proportion of the CMC or a salt thereof to the total amount of the CMC or a salt thereof and water may be, for example, from about 0.01 to about 10 mass% (e.g., from about 0.1 to about 5 mass%), preferably from about 0.3 to about 3 mass% (e.g., from about 0.5 to about 2.0 mass%), and more preferably from about 0.6 to about 2 mass% (e.g., from about 0.7 to about 1.5 mass%).

The water is usually pure water. The pH of the aqueous composition may be acidic, but is usually neutral or alkaline (particularly neutral).

The aqueous composition may contain other components different from the CMC or a salt thereof and water. For example, when the CMC or a salt thereof is used as an electrode material (such as a thickener and/or a dispersion stabilizer) (that is, when used as a material for a lithium-ion battery), the aqueous composition may contain other electrode materials such as an active material (e.g., a carbon material such as natural graphite, artificial graphite, hard carbon, or MCMB (mesophase microbeads), lithium titanate, and the like) and a binder (a styrene-butadiene copolymer and the like).

The aqueous composition can be prepared by mixing the granular CMC or a salt thereof, water, and other components that may be contained as necessary. The mixing order, method, and the like are not particularly limited, but it is preferable to add (particularly, slowly add or add in small portions) the granular CMC or a salt thereof while stirring water using a stirrer or the like, from the viewpoint of effectively suppressing the formation of lumps.

The stirring speed (rotation speed of the stir bar or the stirring blade) when adding the granular CMC or salt thereof to water may be, for example, from 10 to 6000 rpm, preferably from 1000 to 6000 rpm, more preferably from 1000 to 5000 rpm, still more preferably from 1500 to 4800 rpm, and yet still more preferably from 2000 to 4500. After the addition of the CMC or a salt thereof is completed, stirring is usually performed until dissolution is completed (or the stirring torque is stabilized).

The stirring speed after completion of the addition may be equal to or higher than the stirring speed during the addition, or the stirring may be performed slowly, and the stirring speed may be, for example, from about 10 to about 1000 rpm (e.g., from about 50 to about 800 rpm), preferably from about 100 to about 500 rpm (e.g., from about 150 to about 450 rpm), and more preferably from about 200 to about 400 rpm (e.g., from about 250 to about 350 rpm). In the present disclosure, even when the stirring is performed gently, the dissolution time can be effectively shortened.

Examples of the shape of the stirring blade of the stirrer include a turbine blade (e.g., an edged turbine blade, a flat or pitched turbine blade (such as a fan turbine blade or a disk turbine blade), or the like), a paddle blade (e.g., a flat paddle blade, a pitched paddle blade, or the like), a propeller blade, a Pfaudler blade, an anchor blade (e.g., a gate blade or the like), and a ribbon blade (or a helical ribbon blade) (e.g., a multi-ribbon blade such as a double ribbon blade, a single ribbon blade, or the like). These stirring blades can be used alone or in combination of two or more. Among these stirring blades, a ribbon blade is preferable.

When the stirring blade is a turbine blade, the stirring can be performed at a stirring speed of from 1000 to 100000 rpm.

A non-limiting list of exemplary embodiments and combinations of exemplary embodiments of the present disclosure is disclosed below.

<1> First Aspect (Granular CMC or Salt thereof)

[1-1] Carboxymethyl cellulose or a salt thereof, being granular carboxymethyl cellulose or a salt thereof and having a bulk density of from 100 to 400 g/L.

[1-2] The carboxymethyl cellulose or a salt thereof according to [1-1], having a total pore volume of from 1.3 to 3.5 mL/g as measured by mercury porosimetry.

[1-3] The carboxymethyl cellulose or a salt thereof according to [1-1] or [1-2], having a porosity of from 65.0 to 90.0 volume% as measured by mercury porosimetry.

[1A] Carboxymethyl cellulose or a salt thereof, being granular carboxymethyl cellulose or a salt thereof and having a total pore volume of from 1.3 to 3.5 mL/g as measured by mercury porosimetry.

[1B] Carboxymethyl cellulose or a salt thereof, being granular carboxymethyl cellulose or a salt thereof and having a porosity of from 65.0 to 90.0 volume% as measured by mercury porosimetry.

<2> Second Aspect (Granular Material of CMC or Salt thereof)

[2-1] A granular material of carboxymethyl cellulose or a salt thereof, having a bulk density of from 100 to 400 g/L.

[2-2] The granular material of the carboxymethyl cellulose or a salt thereof according to [2-1], having a total pore volume of from 1.3 to 3.5 mL/g as measured by mercury porosimetry.

[2-3] The granular material of the carboxymethyl cellulose or a salt thereof according to [2-1] or [2-2], having a porosity of from 65.0 to 90.0 volume% as measured by mercury porosimetry.

[2-4] The granular material of particles of the carboxymethyl cellulose or a salt thereof according to any one of [2-1] to [2-3], being a lithium-ion battery material.

[2A] A granular material of carboxymethyl cellulose or a salt thereof, having a total pore volume of from 1.3 to 3.5 mL/g as measured by mercury porosimetry.

[2B] A granular material of carboxymethyl cellulose or a salt thereof, having a porosity of from 65.0 to 90.0 volume% as measured by mercury porosimetry.

<3> Third Aspect (Composition)

[3-1] A composition containing the carboxymethyl cellulose or a salt thereof described in <1> and/or the granular material of the carboxymethyl cellulose or a salt thereof described in <2>.

[3-2] The composition according to [3-1], being a lithium-ion battery material.

<4> Fourth Aspect (Aqueous Composition)

[4-1] An aqueous composition containing: water; and the carboxymethyl cellulose or a salt thereof described in <1> or the granular material of the carboxymethyl cellulose or a salt thereof described in <2>.

<5> Fifth Aspect (Material for Lithium-Ion Battery)

[5-1] A material for a lithium-ion battery, the material containing the carboxymethyl cellulose or a salt thereof described in <1>, the granular material of the carboxymethyl cellulose or a salt thereof described in <2>, and/or the aqueous composition described in <4>.

<6> Sixth Aspect (Production Method)

[6-1] A method for producing the carboxymethyl cellulose or a salt thereof described in <1>, the method including granulating CMC or a salt thereof as a raw material.

Examples

The present disclosure will be described in more detail by way of Examples, but the interpretation of the present disclosure is not limited by the Examples.

Raw Material

Raw material (1): Carboxymethyl cellulose sodium salt, available from Daicel Miraizu Ltd., "CMC Daicel Product No. 2200", degree of etherification (degree of substitution): 0.93, average particle size D50: 101 $\mu$m, viscosity of 1 mass% aqueous solution (25°C, 60 rpm): 1657 mPa·s

Raw material (2): Pulverized product of material (1), average particle size D50: 50 $\mu$m

Raw material (3): Carboxymethyl cellulose sodium salt, available from Daicel Miraizu Ltd., "CMC Daicel Product No. 22005Y", degree of etherification (degree of substitution): 0.90, average particle size D50: 50 $\mu$m, viscosity of 1 mass% aqueous solution (25°C, 60 rpm): 1990 mPa·s

Example 1 Production of Granular CMC-Na

500 g of the raw material (2) was charged into a pulsed fluidized bed (PLS) granulator ("Fluidized Bed Granulating Dryer (PLS)" available from Powrex Corporation), and a fluidized bed of the raw material (2) was formed by an air flow. Then, while drying, pure water was sprayed into the bed to cause the fine particles to adhere to and agglomerate with each other, thereby granulating the fine particles to obtain a granular material of CMC-Na. The granulation conditions were as described below.

Granulation Conditions

Supply air temperature: 60°C
Supply air amount: 0.3 m$^3$/min
Spray liquid rate: From 6 to 7 g/min

Atomization air amount: 40 L/min
Water addition percentage: 21% with respect to the raw material
Spray position: Top spray system (middle stage)

Example 2 Production of Granular CMC-Na

500 g of the raw material (1) was charged into a normal fluidized bed (FD) granulator ("Fluidized Bed Granulating Dryer (FD)" available from Powrex Corporation), and a fluidized bed of the raw material (1) was formed by an air flow. Then, while drying, pure water was sprayed into the bed to cause the fine particles to adhere to and agglomerate with each other, thereby granulating the fine particles to obtain a granular material of CMC-Na. The granulation conditions were as described below.

Granulation Conditions

Supply air temperature: 60°C
Supply air amount: From 0.3 to 0.5 m$^3$/min
Spray liquid rate: From 3 to 7 g/min
Atomization air amount: 40 L/min
Water addition percentage: From 10 to 14% with respect to the raw material
Spray position: Top spray system (middle stage)

Comparative Example 1 Production of Granular CMC-Na

500 g of the raw material (1) was charged into a stirring granulation (VG) type granulator ("Stirring Mixing Granulator (VG)" available from Powrex Corporation). Then, while stirring, pure water was sprayed by pulling a lever once every 5 seconds with a spray unit in a most squeezed state using a spray atomizer ("No. 503" available from FURUPLA CO., LTD.) to cause the fine particles to adhere to and agglomerate with each other, thereby granulating the fine particles to obtain a granular material of CMC-Na. The granulation conditions were as described below.

Granulation Conditions

Water addition percentage: 20% with respect to the raw material
Spray liquid rate: 5 g/min
Water addition method: 10 mass% of water was added and stirred for 5 minutes, and this was repeated (intermittent spray)
Blade rotation speed: 350 rpm
Screw rotation speed: 3000 rpm

Thereafter, the granular material was dried at 85°C using an all exhaust type dryer ("SPH-301S" available from ESPEC CORP.) until the water content relative to the total amount of the CMC-Na and water became 10 mass% or less.

Comparative Examples 2 to 4

The raw materials (1) to (3) were used without performing the granulation treatment and the classification treatment.

Measurement and Evaluation

The following items were measured and evaluated. The results are shown in Table 1.

Bulk Density

The tap bulk density of the obtained sample was measured as follows. A 200 mL graduated cylinder was placed in a cylinder for preventing overturning, and the cylinder was placed on a balance and tared. The sample was gently filled into the graduated cylinder up to 200 mL, and the sample was weighed. A rubber stopper was attached to the graduated cylinder, and the operation of dropping the graduated cylinder vertically from a height of 5 cm was repeated 10 times, after which the volume was read. The bulk density was calculated from the following equation.
Equation:

$$\text{Bulk density (g/L)} = \frac{\text{Net weight of the sample (g)}}{\text{Volume of the sample after dropping (ml)}} \times 1000$$

Total Pore Volume

The total pore volume of the obtained sample was measured by mercury porosimetry. Details of the mercury porosimetry were in accordance with JIS R 1655:2003. The total pore volume was measured using a mercury porosimeter.

Porosity

The porosity of the obtained sample was measured by mercury porosimetry. Details of the mercury porosimetry were in accordance with JIS R 1655:2003. The porosity was measured using a mercury porosimeter.

Dispersibility: Powder Tester Scattering Degree

Using a powder characteristics tester (Powder Tester PT-X (available from Hosokawa Micron Corporation)), the dispersibility was calculated from the amount of powder that has dropped onto a watch glass when 10 g of a sample is charged into a dispersing unit of PT-X and dropped, according to the following equation:

Dispersibility (%) = (10 (g) - Amount (g) of powder that has dropped onto the watch glass)/10 (g)

Average Particle Size D50

The volume-based cumulative 50% size D50 was measured using an image-based particle size distribution measurement device ("morphologiG3" available from Malvern Panalytical Ltd.).

Presence or Absence of Formation of Lumps

The obtained sample was added all at once to pure water, so that the concentration of the granular CMC or a salt thereof is 1.5%, followed by stirring and mixing at a temperature of 25°C and a stirring speed of 4000 rpm for a stirring time of 3 minutes. The obtained aqueous solution was filtered through a wire mesh having a mesh size of 106 $\mu$m. Whether transparent agglomerates are present or absent on the wire mesh was visually confirmed.
In the granular CMC or a salt thereof in Examples 1 and 2, the formation of lumps was not visually confirmed even in stirring for 3 minutes, which is about one tenth of the known mixing time.
In Comparative Examples 1 and 2, a large number of lumps were visually observed, in which the weight of the lumps on the wire mesh in a state of containing water was about 1% of the amount of the granular CMC or a salt thereof added. Similarly, in Comparative Examples 3 and 4, a large number of lumps were also visually observed.

[Table 1]

| | Raw material | Granulation method | Properties of CMC | | Physical properties | | | | | Evaluation |
|---|---|---|---|---|---|---|---|---|---|---|
| | | | Degree of substitution | Viscosity of 1% aqueous solution (mPa·s) | Average particle size D50 (μm) | Porosity measured by mercury porosimetry (%) | Total pore volume (mL/g) | Bulk density (g/L) | Dispersibility measured using Powder Tester | Presence or absence of formation of lumps |
| Example 1 | (2) | Fluidized bed granulation (PLS type) | 0.93 | - | 171 μm | 79.3 | 2.4 | 305 | 15.9 | Absent |
| Example 2 | (1) | Fluidized bed granulation (FD type) | 0.93 | - | 176 μm | 79.3 | 2.5 | 333 | 16.6 | Absent |
| Comparative Example 1 | (1) | Stirring gran-ulation | 0.93 | - | 174 μm | - | - | 412 | 9.6 | Present |
| Comparative Example 2 | (2) | No granulation treatment | 0.93 | - | 50 μm | - | - | 703 | 21.2 | Present |
| Comparative Example 3 | (1) | No granulation treatment | 0.93 | 1657 | 101 μm | 62.8 | 1.1 | 608 | 9.4 | Present |
| Comparative Example 4 | (3) | No granulation treatment | 0.90 | 1990 | 50 μm | - | - | 683 | 28.5 | Present |
| ※ In the table, "-" indicates "not measured". | | | | | | | | | | |

EP 4 782 481 A1

13

The water content in the obtained sample, the viscosity of the aqueous solution, and the dissolution rate in water can be measured as follows.

Water Content

The accurately weighed sample is dried in a constant-temperature dryer at 105°C for 3 hours, and the water content is calculated from the weight after drying.

Viscosity of Aqueous Solution

100 mL of ion-exchanged water is placed in a dissolution bottle for viscosity measurement (hereinafter referred to as "viscosity bottle"). Then, $(2.50 \times X_3)$ g of a sample, which has been weighed accurately and separately, is added thereto in small portions without forming lumps, and is lightly crushed with a glass rod. After the sample has sufficiently swollen, the amount $V_3$ (mL) of ion-exchanged water added for correction as determined by the following equation is added, and the sample is completely dissolved while stirring with a glass rod from time to time. After the sample had been dissolved, the mixture was degassed under reduced pressure, the viscosity bottle was placed in a constant-temperature water bath until the liquid temperature reached 25°C, the sample solution was uniformly stirred. Then, the viscosity was measured at 60 rpm using a B-type viscosimeter. The viscosity is calculated from the following equation:

$$\text{Viscosity (mPa·s)} = \text{Reading of scale} \times \text{Conversion factor}$$

$$V_3 = 2.5 \times (100 - X_3 - M_3) - 100$$

where $V_3$ is the amount (mL) of ion-exchanged water added for correction, $X_3$ is the measured concentration (mass%), and $M_3$ is the loss on drying (mass%) of the sample.

The loss on drying is measured in accordance with JIS P 8203:2010 (ISO 638:2008), "Paper, board and pulps - Determination of dry matter content - Oven-drying method".

Dissolution Time

220 g of pure water is weighed in a cylindrical glass vessel having a diameter of 55 mm and a depth of 130 mm, the temperature is adjusted to 25°C in a constant-temperature bath, and a torque meter ("Rotatory Torque Meter TYPE YT" available from Shinto Scientific Co., Ltd.) and a stirrer equipped with a helical ribbon-type stirring blade ("Three-One Motor BL1200" available from Shinto Scientific Co., Ltd.) are mounted on the cylindrical glass vessel. The helical ribbon-type stirring blade may have a ribbon width of 3 mm, a height of 80 mm, a width (perpendicular to the rotation axis) of 40 mm, with the number of blades being single, and with the number of helical turns of the ribbon being three (a shape in which the ribbon makes three turns in 80 mm in the height direction). While stirring the pure water at 750 rpm, a 0.8 mass% portion (about 1.77 g) of the sample is slowly added over from 5 to 10 seconds. Immediately after the addition, the stirring speed is changed to 300 rpm and the time measurement is started, and the time taken until the torque value is stabilized at a predetermined value is defined as the dissolution time. The maximum torque achievement rate is calculated as a percentage of the torque value relative to the torque value stabilized at the predetermined value as a reference (100%).

Industrial Applicability

The granular CMC or a salt thereof of the present disclosure is less likely to form lumps when mixed with water, and thus can be preferably used for production of an aqueous composition, and has industrial applicability.

**Claims**

1. Carboxymethyl cellulose or a salt thereof, being granular carboxymethyl cellulose or a salt thereof and having a bulk density of from 100 to 400 g/L.

2. The carboxymethyl cellulose or a salt thereof according to claim 1, having a total pore volume of from 1.3 to 3.5 mL/g as measured by mercury porosimetry.

3. The carboxymethyl cellulose or a salt thereof according to claim 1 or 2, having a porosity of from 65.0 to 90.0 volume% as measured by mercury porosimetry.

4. A material for a lithium-ion battery, the material comprising particles of the carboxymethyl cellulose or a salt thereof according to claim 1 or 2.

5. A method for producing particles of the carboxymethyl cellulose or a salt thereof described in claim 1 or 2, the method comprising granulating CMC or a salt thereof as a raw material.

## INTERNATIONAL SEARCH REPORT

| International application No. |
|---|
| **PCT/JP2024/033382** |

**A. CLASSIFICATION OF SUBJECT MATTER**

*C08J 3/12*(2006.01)i; *C08B 11/12*(2006.01)i; *H01M 4/62*(2006.01)i
FI: C08J3/12; H01M4/62 Z; C08B11/12

According to International Patent Classification (IPC) or to both national classification and IPC

**B. FIELDS SEARCHED**

Minimum documentation searched (classification system followed by classification symbols)

C08J3/12; C08B11/12; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-522122 A (DOW GLOBAL TECHNOLOGIES LLC) 20 September 2012 (2012-09-20) claims, examples | 1 |
| Y | | 4 |
| X | JP 46-2190 B1 (SHIKOKU CHEMICALS CORPORATION) 20 January 1971 (1971-01-20) claims, examples | 1-3, 5 |
| Y | | 4 |
| Y | JP 2015-53119 A (INOUE MFG INC.) 19 March 2015 (2015-03-19) claims, examples | 4 |
| A | WO 2021/019896 A1 (DAICEL FINECHEM LTD.) 04 February 2021 (2021-02-04) entire text | 1-5 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 November 2024** | **03 December 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/033382**

| Patent document cited in search report | | | Publication date (day/month/year) | Patent family member(s) | | | Publication date (day/month/year) |
|---|---|---|---|---|---|---|---|
| JP | 2012-522122 | A | 20 September 2012 | US 2012/0034352 A1 claims, examples | | | |
| JP | 46-2190 | B1 | 20 January 1971 | (Family: none) | | | |
| JP | 2015-53119 | A | 19 March 2015 | (Family: none) | | | |
| WO | 2021/019896 | A1 | 04 February 2021 | CN 113993904 A entire text | | | |

Form PCT/ISA/210 (patent family annex) (July 2022)

**EP 4 782 481 A1**

**Patent documents cited in the description**

- JP 8073501 A
- JP 2021021018 A